# FASCICULE DE BREVET EUROPEEN

(11) **EP 2 162 340 B1**
(45) Date de publication et mention de la délivrance du brevet: **06.10.2010**
(21) Numéro de dépôt: 08806027.2
(22) Date de dépôt: 18.06.2008
(51) Int. Cl.: B62D 21/11, B62D 21/15, B60G 9/00

(54) **AGENCEMENT FILTRANT ECONOMIQUE POUR LA FIXATION D'UN MINI BERCEAU**
ÖKONOMISCHE FILTRIERANORDNUNG ZUR MONTAGE EINES MINITRÄGERS
ECONOMICAL FILTRATION ARRANGEMENT FOR ATTACHING A MINI CRADLE

(30) Priorité: 09.07.2007 FR 0704930
(43) Date de publication de la demande: 17.03.2010
(73) Titulaire: Renault S.A.S., 92100 Boulogne-Billancourt (FR)
(72) Inventeur: ROLLET, REMI, F-91190 Gif Sur Yvette (FR)
(86) Numéro de dépôt international: PCT/FR2008/051092
(87) Numéro de publication internationale: WO 2009/007565

(56) Documents cités:
- EP-A- 1 081 023
- EP-A- 1 710 152
- DE-A1- 19 703 951
- FR-A- 2 832 686

## Description

L'invention concerne un agencement de la structure avant d'un véhicule automobile permettant de lier un berceau ou mini berceau aux longerons latéraux. Elle concerne aussi un véhicule automobile en tant que tel comprenant un tel agencement. Le document EP 1 710 152 décrit un agencement selon le préambule de la revendication 1.

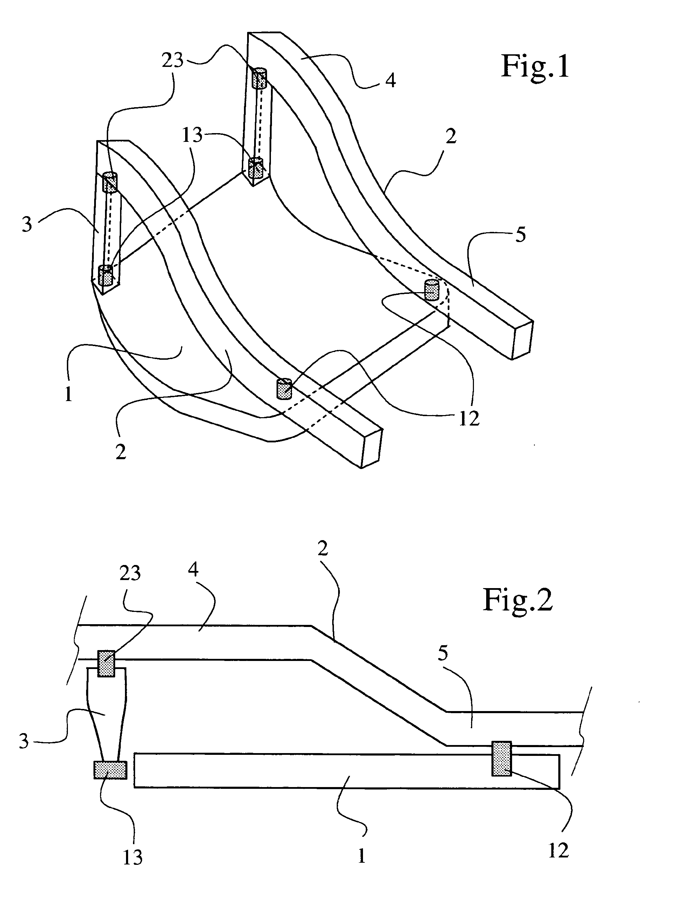

Une structure avant habituelle de véhicule automobile, illustrée schématiquement sur les figures 1 et 2, comprend deux longerons latéraux sensiblement symétriques 2 s'étendant dans la direction sensiblement longitudinale et reliés par un mini berceau 1, les parties antérieures 4 des longerons 2 étant relevées pour supporter les attaches du groupe moto-propulseur alors que ses parties arrières 5 sont plus basses pour s'étendre longitudinalement sous la carcasse de l'habitacle du véhicule. Le berceau 1 est relié à la partie antérieure 4 de chaque longeron 2 par des biellettes 3, reliées dans leur partie inférieure par une première liaison 13 au berceau 1 et dans leur partie supérieure par une seconde liaison 23 aux longerons 2. A l'arrière, le berceau 1 est lié directement aux longerons 2 par des plots de fixation 12.

Pour optimiser le confort du véhicule et éviter la propagation des vibrations et chocs subis par le véhicule sur la chaussée, une solution consiste à utiliser des moyens de filtration au niveau des trois points 12, 13, 23 de liaison de l'agencement du berceau sur chaque longeron. Ces filtrations améliorent grandement l'acoustique globale du véhicule, notamment en filtrant efficacement les hautes fréquences, de l'ordre de 50 à 300 Hz.

La solution précédente est toutefois chère et pour des véhicules bas coûts, ce principe de filtration n'est pas implémenté.

L'objet de la présente invention consiste à proposer un nouvel agencement de berceau sur les longerons, permettant une filtration tout en restant bon marché.

L'invention repose sur un agencement pour véhicule automobile, comprenant un berceau relié à des longerons d'une part par une liaison arrière, et d'autre part par l'intermédiaire d'une biellette à l'avant, cette biellette étant liée au longeron dans sa partie supérieure par une première liaison et au berceau dans sa partie inférieure par une seconde liaison, **caractérisé en ce que** la liaison arrière entre le berceau et les longerons n'est dotée d'aucun moyen de filtration, et en ce qu'une seule des deux liaisons de la biellette est dotée d'un moyen de filtration.

Selon une première réalisation, seule la liaison entre la biellette et les longerons est équipée d'un moyen de filtration.

Selon une seconde réalisation, seule la liaison entre la biellette et le berceau est équipée d'un moyen de filtration.

La liaison de la biellette non équipée du moyen de filtration peut comprendre un moyen de fixation réglable verticalement de son positionnement relativement à la biellette.

La liaison de la biellette non équipée du moyen de filtration peut reposer sur une ouverture oblongue aménagée au sein de la biellette s'étendant verticalement pour pouvoir recevoir un moyen de fixation selon plusieurs hauteurs possibles.

La liaison de la biellette non équipée du moyen de filtration peut comprendre un moyen de liaison positionné dans un plan sensiblement horizontal.

Le moyen de filtration de la liaison de la biellette équipée du moyen de filtration peut autoriser un déplacement relatif maximal de quelques millimètres de la biellette au niveau de cette liaison puis se comporter comme une liaison rigide n'autorisant plus le déplacement de la biellette au-delà, afin de limiter les contraintes mécaniques répercutées sur la liaison arrière entre le berceau et chaque longeron.

De même, la liaison de la biellette non équipée du moyen de filtration peut comprendre un moyen de fixation réglable verticalement de son positionnement relativement à la biellette et le positionnement de cette fixation réglable peut être tel qu'il autorise le déplacement relatif maximal de la biellette dans toutes les directions sur sa seconde liaison dotée du moyen de filtration pour pouvoir remplir sa fonction de filtration.

Enfin, l'invention porte aussi sur un véhicule automobile comprenant un agencement tel que décrit ci-dessus.

Ces objets, caractéristiques et avantages de la présente invention seront exposés en détail dans la description suivante de modes d'exécution particuliers faits à titre non-limitatif en relation avec les figures jointes parmi lesquelles :
La figure 1 représente une vue en perspective schématique d'un agencement d'un berceau sur un longeron de l'état de la technique ;
la figure 2 représente une vue schématique de côté en coupe selon un plan vertical longitudinal d'un agencement d'un berceau sur un longeron de l'état de la technique ;
la figure 3 représente une vue schématique de côté en coupe selon un plan vertical longitudinal d'un agencement d'un berceau sur un longeron selon un mode d'exécution de l'invention ;
la figure 4 représente une vue schématique de côté en coupe selon un plan vertical longitudinal d'un agencement d'un berceau sur un longeron selon un deuxième mode d'exécution de l'invention ;
la figure 5 représente le comportement mécanique d'une liaison de la biellette selon une variante d'exécution de l'invention.

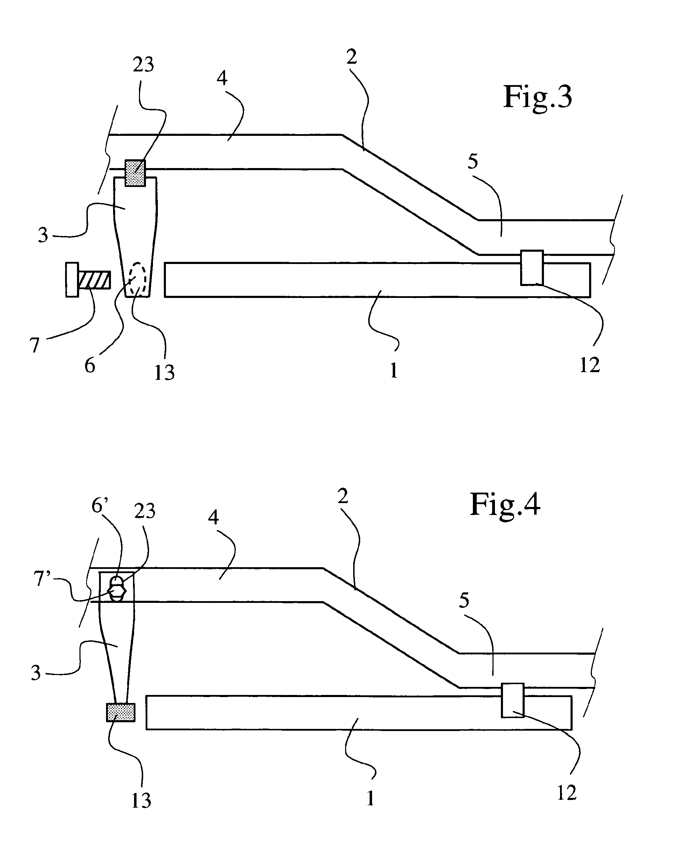

Les figures 3 à 5 illustrent des modes d'exécution de l'invention et les mêmes références sont utilisées pour désigner des éléments correspondant à ceux des figures 1 et 2. Nous entendrons par direction longitudinale la direction dans le sens du véhicule automobile, de l'arrière vers l'avant. Nous entendrons par direction transversale une direction horizontale et perpendiculaire à la direction longitudinale. Enfin, nous entendrons par direction verticale la direction perpendiculaire aux deux précédentes qui définissent un plan horizontal.

Selon le concept de l'invention, un berceau ou mini-berceau 1 est relié aux longerons 2 selon des moyens de liaison modifiés, qui consistent en l'implémentation d'aucune filtration au niveau de la liaison très rigide 12 entre le berceau 2 et la partie arrière 5 de chaque longeron, et une seule filtration au niveau d'une des liaisons 13, 23 de la biellette 3.

Par exemple, le premier mode d'exécution représenté sur la figure 3 illustre une solution dans laquelle la liaison 23 entre la biellette 3 et la partie antérieure 4 de chaque longeron est dotée d'un moyen de filtration, alors que la seconde liaison de la biellette 13 avec le berceau n'en a pas. Toutefois, cette seconde liaison est aménagée pour pouvoir être effectuée facilement malgré les différentes variations de la géométrie de ces éléments de l'agencement du fait des incertitudes industrielles. En effet, du fait de la liaison arrière rigide 12 du berceau sur le longeron, il y a une perte de mouvement du berceau relativement au longeron. Ainsi, il peut arriver que la biellette soit difficile à mettre en place entre ses deux liaisons 13, 23. Pour faciliter cette construction, la seconde liaison 13 sur le berceau, ne possédant pas de moyen de filtration, est réalisée par l'intermédiaire d'un moyen de fixation 7 comme une vis traversant dans la direction longitudinale une ouverture oblongue 6 s'étendant verticalement au sein de la biellette 3. Cet agencement permet ainsi de rattraper les éventuelles dispersions verticales et de simplifier la fixation de la biellette 3, par le positionnement possible du moyen de fixation 7 à plusieurs hauteurs différentes au sein de l'ouverture oblongue 6 de la biellette 3. Tout autre moyen de liaison équivalent permettant une fixation réglable de la biellette pourrait être implémenté. Ainsi, cette fixation réglable permet finalement la mise en oeuvre d'un moyen de fixation de la biellette dans un plan horizontal, dont la position relativement à la biellette est réglable dans la direction verticale.

Le second mode d'exécution de l'invention illustré sur la figure 4 diffère du précédent en ce qu'un moyen de filtration est implémenté sur la liaison 13 entre le berceau 1 et la biellette 3, la liaison entre la biellette 3 et le longeron 2 étant fixe sans moyen de filtration, cette seconde liaison rigide étant toutefois dotée d'un mécanisme de réglage vertical de son positionnement. Pour cela, une vis 7' traverse dans la direction transversale une ouverture oblongue 6' s'étendant verticalement aménagée au sein de la partie supérieure de la biellette.

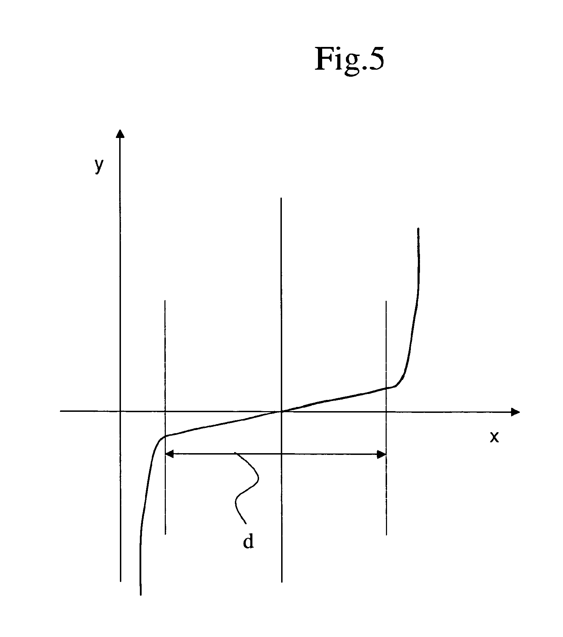

Selon une variante d'exécution, le moyen de filtration implémenté sur une seule des liaisons de la biellette 3 ne fonctionne que selon une plage limitée. Ainsi, le déplacement de la biellette au niveau de cette liaison pour la mise en oeuvre de la fonction de filtrage lors du déplacement du véhicule sur la chaussée n'est autorisé que sur quelques millimètres, sur la longueur d de la figure 5. Au-delà, ce déplacement est interdit, ce qui équivaut à la suppression de la fonction de filtrage. Ce fonctionnement, illustré sur la figure 5 qui représente les efforts sur un axe y en fonction du déplacement sur l'axe x, est avantageux pour la limitation des contraintes répercutées sur la liaison arrière rigide entre le berceau 1 et les longerons 2. De telles contraintes importantes peuvent par exemple survenir si le véhicule subit un choc qui se répercute verticalement au niveau de la liaison 13 de la biellette 3 avec le berceau 1.

Dans le cas de l'implémentation d'une telle variante d'exécution, la seconde liaison de la biellette 3 ne possédant pas la fonction de filtrage pourra être réglable verticalement, comme explicité ci-dessus. Lors du montage de la biellette 3, cette fixation réglable sera positionnée de sorte que la seconde fixation dotée du moyen de filtrage se trouve relativement centrée vis-à-vis de sa plage de fonctionnement, afin de pouvoir subir le déplacement maximal autorisé dans toutes les directions pour mettre en oeuvre efficacement sa fonction de filtrage sur sa plage autorisée.

Ces solutions atteignent donc bien l'objet recherché et présentent les avantages suivants :
- elles mettent en oeuvre un filtrage réduit qui représente un compromis astucieux entre les solutions extrêmes de l'état de la technique. Seule une des liaisons les moins raides, au niveau de la biellette, est équipée d'un moyen de filtrage, ce qui permet une filtration efficace ;
- la liaison arrière du berceau sur chaque longeron est raide par nature, et nécessite moins l'ajout d'un moyen de filtrage que les autres liaison : c'est pourquoi il est choisi de ne pas l'équiper d'un moyen de filtration. Cette solution facilite d'ailleurs la mise au point de la tenue de route du véhicule ;
- comme finalement une seule des trois liaisons de l'agencement est équipée d'un moyen de filtration, la solution est simple et économique.

## Revendications

1. Agencement pour véhicule automobile, comprenant un berceau (1) relié à des longerons (2) d'une part par une liaison arrière (12), et d'autre part par l'intermédiaire d'une biellette (3) à l'avant, cette biellette étant liée au longeron (2) dans sa partie supérieure par une première liaison (23) et au berceau (1) dans sa partie inférieure par une seconde liaison (13) et une seule des deux liaisons (13, 23) de la biellette (3) étant dotée d'un moyen de filtration, **caractérisé en ce que** la liaison arrière (12) entre le berceau (1) et longerons (2) n'est dotée d'aucun moyen de filtration.

2. Agencement pour véhicule automobile selon la revendication 1, **caractérisé en ce que** seule la liaison entre la biellette (3) et les longerons (2) est équipée d'un moyen de filtration.

3. Agencement pour véhicule automobile selon la revendication 1, **caractérisé en ce que** seule la liaison entre la biellette (3) et le berceau (1) est équipée d'un moyen de filtration.

4. Agencement pour véhicule automobile selon l'une des revendications précédentes, **caractérisé en ce que** la liaison de la biellette (3) non équipée du moyen de filtration comprend un moyen de fixation réglable verticalement de son positionnement relativement à la biellette (3).

5. Agencement pour véhicule automobile selon la revendication précédente, **caractérisé en ce que** la liaison de la biellette (3) non équipée du moyen de filtration repose sur une ouverture oblongue (6 ; 6') aménagée au sein de la biellette (3) s'étendant verticalement pour pouvoir recevoir un moyen de fixation (7 ; 7') selon plusieurs hauteurs possibles.

6. Agencement pour véhicule automobile selon la revendication 4 ou 5, **caractérisé en ce que** la liaison de la biellette (3) non équipée du moyen de filtration comprend un moyen de liaison (7 ; 7') positionné dans un plan sensiblement horizontal.

7. Agencement pour véhicule automobile selon l'une des revendications précédentes, **caractérisé en ce que** le moyen de filtration de la liaison de la biellette (3) équipée du moyen de filtration autorise un déplacement relatif maximal de quelques millimètres de la biellette (3) au niveau de cette liaison puis se comporte comme une liaison rigide n'autorisant plus le déplacement de la biellette au-delà, afin de limiter les contraintes mécaniques répercutées sur la liaison arrière (12) entre le berceau (1) et chaque longeron (2).

8. Agencement pour véhicule automobile selon la revendication précédente, **caractérisé en ce que** la liaison de la biellette (3) non équipée du moyen de filtration comprend un moyen de fixation réglable verticalement de son positionnement relativement à la biellette (3) et **en ce que** le positionnement de cette fixation réglable est tel qu'il autorise le déplacement relatif maximal de la biellette dans toutes les directions sur sa seconde liaison dotée du moyen de filtration pour pouvoir remplir sa fonction de filtration.

9. Véhicule automobile comprenant un agencement selon l'une des revendications précédentes.

## Claims

1. Arrangement for a motor vehicle, comprising a cradle (1) connected to rails (2) on the one hand by a rear connection (12) and, on the other hand, by means of a link rod (3) at the front, this link rod being connected to the rail (2) in its upper part by a first connection (23) and to the cradle (1) in its lower part by a second connection (13), just one of the two connections (13, 23) of the link rod (3) being fitted with a filtering means, **characterized in that** the rear connection (12) between the cradle (1) and the rails (2) is fitted with no filtering means.

2. Arrangement for a motor vehicle as claimed in Claim 1, **characterized in that** only the connection between the link rod (3) and the rails (2) is equipped with a filtering means.

3. Arrangement for a motor vehicle as claimed in Claim 1, **characterized in that** only the connection between the link rod (3) and the cradle (1) is equipped with a filtering means.

4. Arrangement for a motor vehicle as claimed in one of the preceding claims, **characterized in that** the link rod (3) connection not equipped with the filtering means comprises a fixing means that allows its position relative to the link rod (3) to be adjusted vertically.

5. Arrangement for a motor vehicle as claimed in the preceding claim, **characterized in that** the link rod (3) connection not equipped with the filtering means rests on an oblong opening (6; 6') formed within the link rod (3) running vertically so that it can accept a fixing means (7; 7') at various possible heights.

6. Arrangement for a motor vehicle as claimed in Claim 4 or 5, **characterized in that** the link rod (3) connection not equipped with the filtering means comprises a connecting means (7; 7') positioned in a substantially horizontal plane.

7. Arrangement for a motor vehicle as claimed in one of the preceding claims, **characterized in that** the filtering means of the link rod (3) connection that is equipped with the filtering means allows a maximum relative movement of the link rod (3) of a few millimeters at this connection and thereafter behaves like a rigid connection allowing no further movement of the link rod beyond that, so as to limit the mechanical stresses passed on to the rear connection (12) between the cradle (1) and each rail (2).

8. Arrangement for a motor vehicle as claimed in the preceding claim, **characterized in that** the link rod (3) connection not equipped with the filtering means comprises a fixing means that allows its position relative to the link rod (3) to be adjusted vertically, and **in that** the positioning of this adjustable fixing is such that it allows the maximum relative movement of the link rod in all directions on its second connection provided with the filtering means in order to be able to perform its filtering function.

9. Motor vehicle comprising an arrangement as claimed in one of the preceding claims.

## Patentansprüche

1. Anordnung für ein Kraftfahrzeug, mit einem Träger (1), der einerseits durch eine hintere Verbindung (12) und andererseits vorne durch eine kleine Stange (3) mit Längsträgern (2) verbunden ist, wobei diese kleine Stange in ihrem oberen Teil durch eine erste Verbindung (23) mit dem Längsträger (2) und in ihrem unteren Teil durch eine zweite Verbindung (13) mit dem Träger (1) verbunden ist, und wobei eine einzige der beiden Verbindungen (13, 23) der kleinen Stange (3) mit einem Filtrationsmittel versehen ist, **dadurch gekennzeichnet, dass** die hintere Verbindung (12) zwischen dem Träger (1) und den Längsträgern (2) mit keinem Filtrationsmittel versehen ist.

2. Anordnung für ein Kraftfahrzeug nach Anspruch 1, **dadurch gekennzeichnet, dass** nur die Verbindung zwischen der kleinen Stange (3) und den Längsträgern (2) mit einem Filtrationsmittel versehen ist.

3. Anordnung für ein Kraftfahrzeug nach Anspruch 1, **dadurch gekennzeichnet, dass** nur die Verbindung zwischen der kleinen Stange (3) und dem Träger (1) mit einem Filtrationsmittel versehen ist.

4. Anordnung für ein Kraftfahrzeug nach einem der vorhergehenden Ansprüche, **dadurch gekennzeichnet, dass** die nicht mit dem Filtrationsmittel versehene Verbindung der kleinen Stange (3) ein Befestigungsmittel umfasst, das in seiner Positionierung bezüglich der kleinen Stange (3) vertikal verstellbar ist.

5. Anordnung für ein Kraftfahrzeug nach dem vorhergehenden Anspruch, **dadurch gekennzeichnet, dass** die nicht mit dem Filtrationsmittel versehene Verbindung der kleinen Stange (3) auf einer länglichen Öffnung (6; 6') aufliegt, die in der kleinen Stange (3) ausgebildet ist und sich vertikal erstreckt, um ein Befestigungsmittel (7; 7') gemäß mehreren möglichen Höhen aufnehmen zu können.

6. Anordnung für ein Kraftfahrzeug nach Anspruch 4 oder 5, **dadurch gekennzeichnet, dass** die nicht mit dem Filtrationsmittel versehene Verbindung der kleinen Stange (3) ein in einer im Wesentlichen horizontalen Ebene positioniertes Verbindungsmittel (7; 7') umfasst.

7. Anordnung für ein Kraftfahrzeug nach einem der vorhergehenden Ansprüche, **dadurch gekennzeichnet, dass** das Filtrationsmittel der mit dem Filtrationsmittel versehenen Verbindung der kleinen Stange (3) eine maximale relative Verschiebung der kleinen Stange (3) von mehreren Millimetern an dieser Verbindung gestattet und sich dann wie eine starre Verbindung verhält, die die Verschiebung der kleinen Stange darüber hinaus nicht mehr gestattet, um die mechanischen Belastungen, mit denen die hintere Verbindung (12) zwischen dem Träger (1) und jedem Längsträger (2) beaufschlagt wird, zu begrenzen.

8. Anordnung für ein Kraftfahrzeug nach dem vorhergehenden Anspruch, **dadurch gekennzeichnet, dass** die nicht mit dem Filtrationsmittel versehene Verbindung der kleinen Stange (3) ein Befestigungsmittel umfasst, das in seiner Positionierung bezüglich der kleinen Stange (3) vertikal verstellbar ist, und dass die Positionierung dieser verstellbaren Befestigung derart ist, dass sie die maximale relative Verschiebung der kleinen Stange in allen Richtungen an ihrer mit dem Filtrationsmittel versehenen zweiten Verbindung gestattet, damit sie ihre Filtrationsfunktion erfüllen kann.

9. Kraftfahrzeug, das eine Anordnung nach einem der vorhergehenden Ansprüche umfasst.
